# EUROPEAN PATENT SPECIFICATION

(11) **EP 2 536 018 B1**
(45) Date of publication and mention of the grant of the patent: **30.12.2015**
(21) Application number: 11382204.3
(22) Date of filing: 17.06.2011
(51) Int. Cl.: H02M 7/493, H02M 1/12

(54) **DC-AC converter with a plurality of inverters connected in parallel, and method**
Wechselrichter mit einer Vielzahl von parallel geschalteten Wechselrichtern, und Verfahren
Onduleur avec une pluralité d'onduleurs connectés en parallèle, et procédé

(43) Date of publication of application: 19.12.2012
(73) Proprietor: Ingeteam Technology S.A., 48170 Zamudio (ES)
(72) Inventor: Chivite Zabalza, Francisco Javier, 48170 Zamudio (ES); Rodríguez Vidal, Miguel Angel, 48170 Zamudio (ES); Madariaga Zubimendi, Danel, 48170 Zamudio (ES); Izurza Moreno, Pedro, 48170 Zamudio (ES); Calvo Olalla, Gorka, 48170 Zamudio (ES)
(74) Representative: Igartua, Ismael

(56) References cited:
- WO-A1-93/23914
- US-A- 3 628 123
- US-A- 5 337 227

## Description

### TECHNICAL FIELD

This invention relates to converters for converting energy in high-power environments, and in particular to converters for converting energy for transmission and/or distribution lines from a DC power. This invention also relates to control methods for electronic power converters.

### PRIOR ART

Electronic power converters are currently used in a wide range of applications where a DC/AC conversion is required, carried out by means of inverters comprised in said converters, such as variable-speed drives, variable-speed wind turbines, solar inverters, UPS (Uninterruptible Power Supplies) systems or FACTS (Flexible AC Transmission Systems) devices.

Inverters in electronic power converters comprise static semiconductor-type switches. The switching characteristics of the semiconductor devices currently available on the market enable the most suitable semiconductor for each type of application to be chosen. As a result, depending on the power level required or demanded, different families of semiconductors may be identified:
- MOSFETs: These are FET-technology semiconductors, ideal for low power/voltage and high-frequency-switching applications, such as switched sources and photovoltaic inverters. They are the most widely used in mass-produced consumer appliances.
- IGBTs and IEGTs: IGBT-technology semiconductors, a hybrid between the bipolar transistor and the MOSFET. The IGBT has become the standard in low- and mid-power applications and in multi-MW applications with multi-level topologies. Mitsubishi has recently developed the IEGT with encapsulated press-pack for mid-voltage and high-power applications, as a result of which three-phase inverters of up to 10MVAs can now be made. These are used in industrial drives, electric rail traction and equipment for renewable-energy generators (solar and wind), for example.
- GTOs and IGCTs: Thyristor-technology semiconductors, provided with drivers that enable them to operate with forced switching. As with IEGTs, converters with power units of approximately 10MW can be developed, although the switching frequency is limited to frequencies in the region of 200Hz for GTOs and 1000Hz for IGCTs. They can be applied, for example, in high-power drives, FACTS devices, which may typically be SSSC (Static Series Synchronous Compensator) if connected in series with a transmission and/or distribution line, or STATCOM if connected in parallel with a transmission and/or distribution line, or UPFC (Universal Power Flow Controller), this being a combination of SSSC and STATCOM.

The output voltage of the converter can be increased by increasing the number of levels of its output voltage, thereby increasing the power of the converter, which is achieved by using multi-level inverters. In addition, the quality of the wave of the output voltage increases with the number of levels. As a result, with a three-level inverter, for example, it is possible to obtain a five-level output voltage waveform. The greater the number of levels, the greater the complexity in implementing the converter (of the inverters), as a result of which, and generally speaking, industrial applications are usually based on inverters or branches of up to two or three levels at most.

The most commonly used solution in the manufacture of high-power converters for FACTS applications, for example, is the connection of three-phase inverters of two or three levels to each other by means of intermediate magnetic elements or transformers, so that thanks to said connection or combination, another increase in the output voltage and/or current, and, therefore, in the power of the converter, is achieved, the quality of the output wave also being capable of being improved.

For example, document US 3628123 A discloses the combination in parallel of two inverters by means of interphase transformers or IPTs.

Document US 5337227 A discloses a system that comprises a plurality of interphase transformers connected in series in branch, each of them comprising two inputs to receive two alternating-voltage signals out of phase with each other at a predetermined angle for the elimination or reduction of predetermined harmonic components in a resulting alternating-voltage output signal of the interphase transformer, and a plurality of inverters to generate the alternating-voltage signals that receive the interphase transformers in a first branching stage. In order to add more phase displacements and thereby improve the quality of the output signal, a plurality of output transformers can be included after the interphase transformers

Document WO 93/23914 A1 discloses an electronic power converter comprising a plurality of inverters to generate a plurality of three-phase alternating-voltage signals from at least on DC power line.

### BRIEF DISCLOSURE OF THE INVENTION

It is an object of this invention to provide a converter adapted to convert energy to supply transmission and/or distribution lines from a DC power line, as defined in the claims.

The electronic power converter comprises a plurality of inverters to generate a plurality of three-phase alternating-voltage signals from at least one DC power line, each inverter generating a three-phase alternating-voltage signal, and combination means for combining the inverters in parallel and obtain at least two resulting three-phase alternating-voltage signals, combining the alternating-voltage signals generated by said inverters thus being in parallel.

The converter also comprises an output for a low-power and low-voltage three-phase alternating-voltage output signal, and a low-power and low-voltage transformer block in order to combine the resulting signals in series and provide the output signal, the transformer block being adapted to generate a specific phase displacement and a galvanic insulation between the resulting signals combined in series.

As a result, as the alternating-voltage signals can be connected in series, this doubles the voltage of an alternating-voltage output signal of the transformer block, and, therefore, the converter. Additionally, a single alternating-voltage output signal is generated with the converter, regardless of the number of inverters used, there being used for this purpose a new combination of conventional elements of a smaller size in comparison with the prior art, as they operate in a low-voltage environment, thus resulting in a more compact converter that offers a reduction in costs due to both the elements used and the ease with which it can be transported, for example. Additionally, for example, as there is an output signal, it is sufficient to use, at a later stage, a single coupling transformer to couple said converter to the required load.

It is another object of the invention to provide a control method for electronic power converters, as described in the claims.

With the method, DC power is converted into a plurality of three-phase alternating-voltage signals by means of a plurality of inverters, an inverter being used for each alternating-voltage signal, and the inverters are combined in parallel, generating at least two resulting three-phase alternating-voltage signals, the alternating-voltage signals being combined in parallel for this purpose. In the method, the resulting signals are also combined in series to obtain a low-power and low-voltage alternating-voltage output signal and, during the series combination, a specific phase displacement and a galvanic insulation is generated between the resulting signals that are combined.

As a result, a single alternating-voltage output signal can be generated regardless of the number of inverters used, with the advantages that this offers and which are detailed above.

These and other advantages and characteristics of the invention will be made evident in the light of the drawings and the detailed description thereof.

### DESCRIPTION OF THE DRAWINGS

Figure 1 schematically shows a single-wire diagram of an embodiment of an electronic power converter of the invention.
Figure 2 shows a multi-level inverter of the converter of FIG. 1.
Figure 3 shows a transformer block of the converter of the invention, with a transformer unit.
Figure 4 shows a transformer block of the converter of the invention, with two transformer units.
Figure 5 shows a transformer block of the converter of the invention, with three transformer units.
Figure 6 schematically shows a single-wire diagram of an embodiment of a transformer unit of the transformer block of any of Figures 3 to 5.
Figure 7 schematically shows a single-wire diagram of an arrangement of a first embodiment of an electronic power converter of the invention.
Figure 8 schematically shows a single-wire diagram of an arrangement of a second embodiment of an electronic power converter of the invention.
Figure 9 shows alternating-voltage output signals of two inverters of the converter of Figure 1, which are combined in parallel with each other, with a specific angle of phase displacement between them.

### DETAILED DISCLOSURE OF THE INVENTION

The converter 100 is of the VSC (Voltage Source Converter) type and converts DC power into alternating-voltage power to supply it to a load such as a high-voltage transmission and/or distribution line. Although it is a three-phase system, the figures and the description show and explain the converter 100 in single-wire form for the purpose of clarity.

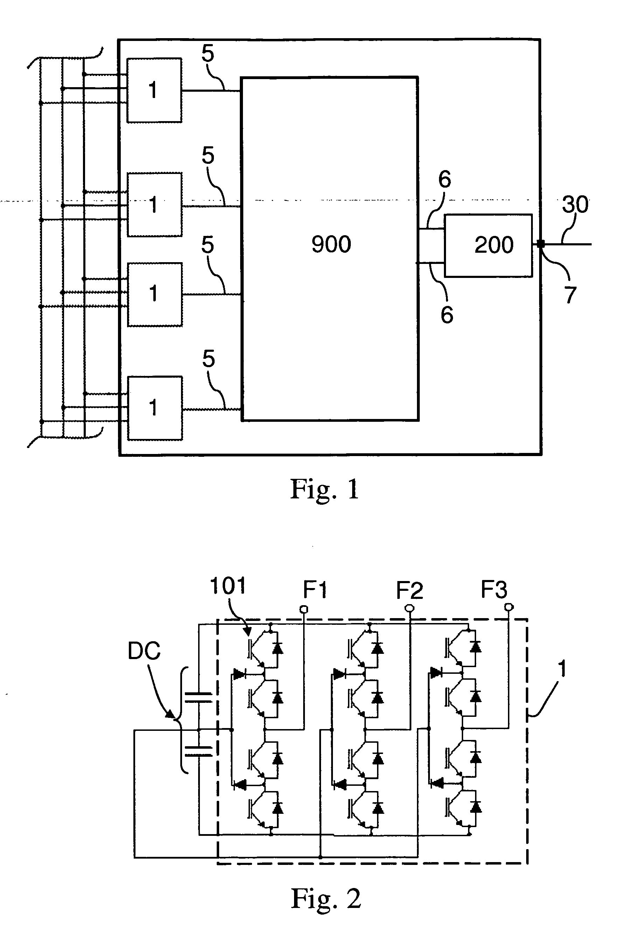

Figure 1 shows, by way of example and in a schematic manner, an embodiment of the converter 100. The converter 100 is connected to a DC power line, and comprises a plurality of multi-level inverters 1, which can comprise three levels, as shown in Figure 2, to convert the power of the DC line into different three-phase alternating-voltage signals 5, each inverter 1 generating a corresponding three-phase alternating-voltage signal 5, with three phases F1, F2 and F3, from the DC power line. The converter 100 also comprises a connection block 900 in order to combine the inverters 1 in parallel and obtain at least two resulting three-phase alternating-voltage signals 6, the three-phase alternating-voltage signals 5 generated by said inverters 1 being combined in parallel for that purpose.

The converter 100 also comprises an output 7 for a low-power and low-voltage three-phase alternating-voltage output signal 30, and a low-power and low-voltage transformer block 200 in order to combine the resulting signals 6 in series and provide the output signal 30, the transformer block 200 being adapted to generate a specific phase displacement and a galvanic insulation between the resulting signals 6 that are combined in series. The transformer block 200 is of the low-power and low-voltage type, and comprises reduced dimensions as it does not have to generate a galvanic insulation in high voltage between the input voltages 6 and the output voltage 30, and its output (the output signal 30) can be supplied to the load (such as a distribution and/or power line) through a single coupling transformer (not shown in the figures) that comprises a single primary and a single secondary. As a result, thanks to the converter 100, an output signal 30 is obtained by using a reduced number of components or elements necessary for supplying a high power level to the load. In addition, as this is a three-phase system, third order harmonics are eliminated or reduced in the alternating-voltage output signal 30 (zero-sequence harmonics) without the need for additional elements, which results in an improvement in the quality of the output signal 30 in a simple and economic manner. As a result, thanks to this type of combination in series, a large amount of harmonics are eliminated or reduced in the output signal 30, optimal quality being obtained in said output signal 30 without adding additional filter elements that can increase the cost and the size of the converter 100. The potential risk of unwanted interactions occurring between said filter elements and the load (such as a power or distribution line) is also eliminated.

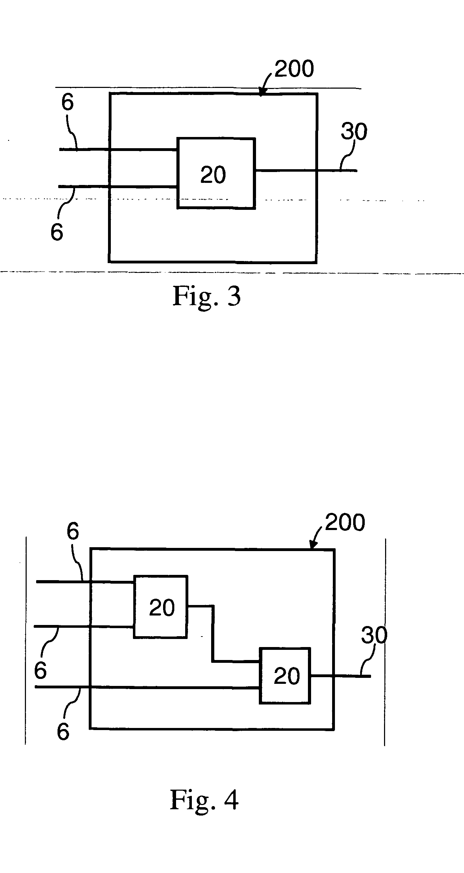

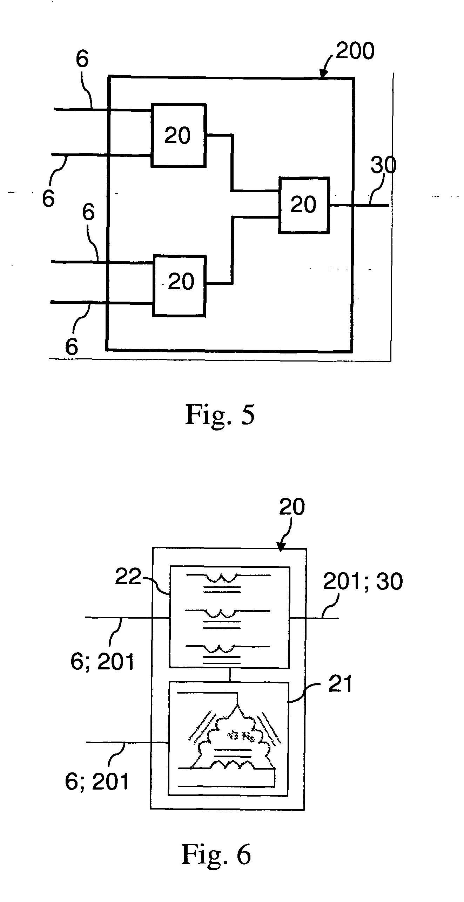

The transformer block 200 is adapted in order to combine the resulting signals 6 in series in twos, comprising a transformer unit 20 for each combination in series. The converter 100 thus comprises as many transformer units 20 as are needed to generate a single output signal 30 from the quantity of resulting signals 6 it comprises. Figure 3 shows an example of a possible embodiment of a transformer block 200 for two resulting signals 6, comprising a transformer unit 20. Figure 4 shows an example of a possible embodiment of a transformer block 200 for three resulting signals 6, comprising two transformer units 20. Figure 5 shows an example of a possible embodiment of a transformer block 200 for four resulting signals 6, comprising three transformer units 20. As shown in Figures 3 to 5, a transformer unit 20 can receive, in order to combine them in series, two resulting signals 6 originating from the connection block 900, a resulting signal 6 originating from the connection block 900 and an intermediate alternating-voltage signal 201 originating from another transformer unit 20, or two intermediate alternating-voltage signals 201 originating from two transformer units 20.

As shown in Figure 6, by way of example, each transformer unit 20 can comprise a delta winding 21 which receives a resulting signal 6 (or an intermediate signal 201), and a wye winding 22 which receives another resulting signal 6 (or an intermediate signal 201), both windings 21 and 22 being coupled magnetically and the wye winding 22 comprising the neutral opened, the output signal of the wye winding 22 and, therefore, of the transformer unit 20 corresponding with an intermediate signal 201 or with the output signal 30.

The connection block 900 can be adapted in order to combine in parallel the alternating-voltage signals 5 that the inverters 1 generate in twos, comprising a connection unit 9 for each combination. Each connection unit 9 can also comprise an interphase transformer or IPT, although other known means of achieving the combination in parallel of the inverters 1 can be used, with which the inverters 1 can be combined in twos or in larger groups. Hereinafter and in a non-limiting manner, throughout the description the connection units 9 correspond with a connection unit 9 that comprises an interphase transformer or IPT.

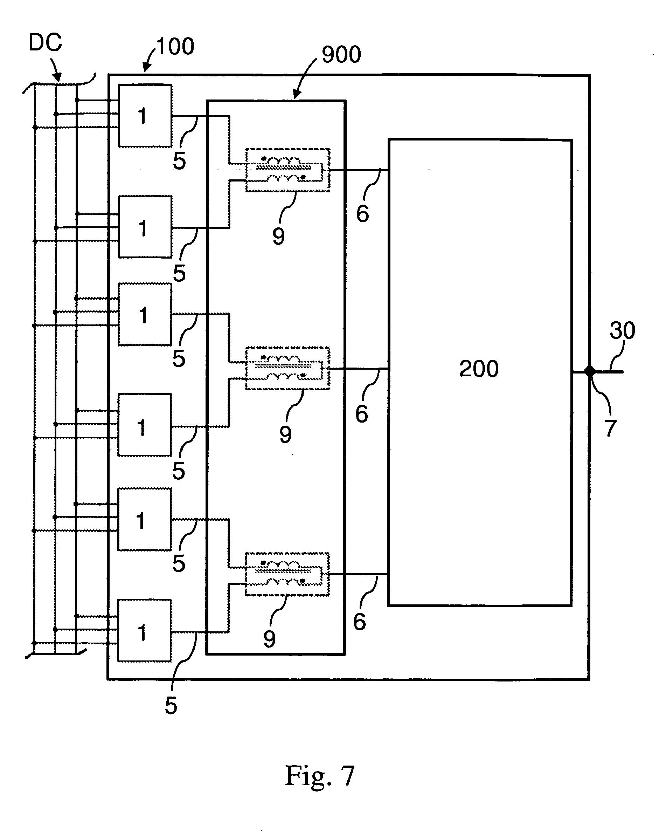

In a first embodiment of the converter 100 the connection units 9 only receive the alternating-voltage signals 5 generated by the inverters 1, so that the converter 100 comprises a number of connection units 9 equal to half the inverters 1 it comprises. In an arrangement of the first embodiment shown in Figure 7, the converter 100 comprises six inverters 1 combined in parallel in twos by means of three connection units 9, although it can have more inverters 1 and, therefore, more connection units 9. Evidently, the proportion of the number of connection units 9 in relation to the number of inverters 1 can change according to the manner in which the inverters 1 are combined in parallel. In the first embodiment, as discussed above, the transformer block 200 comprises a number of transformer units 20 equal to the number of inverters 1 comprised by the converter 100 divided by two, minus one.

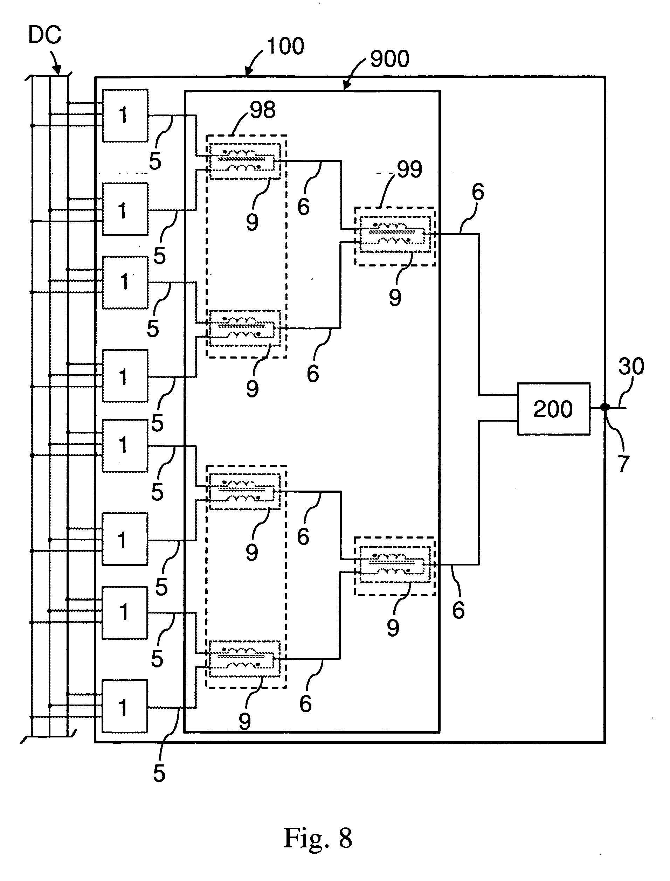

In a second embodiment of the converter 100, the connection units 9 are adapted to receive alternating-voltage signals 5 originating from the inverters 1 and/or resulting signals 6 originating from connection units 9. In the second embodiment, the converter 100 can thus comprise a plurality of connection units 9 connected in series in branch, with as many branches 98 and 99 as connections in series, and a plurality of branches of connection units 9. In an arrangement of the second embodiment, shown by way of example in Figure 8, the branching of the connection units 9 comprises two branches 98 and 99. In the second embodiment, as stated above, the transformer block 200 comprises a number of transformer units 20 equal to the number of inverters 1 comprised by the converter 100 divided by the number of connection units 9 connected in series, minus one.

Each transformer unit 20 generates, between the alternating-voltage signals 6, 201 it combines in series, a minimal phase displacement that can be equal to approximately a factor of 60°. The factor corresponds with the result of the equation 60/m, where m is the number of alternating-voltage signals 6 obtained by combining the groups of inverters 1 whose alternating-voltage output signals 5 are combined in parallel in a single combination. According to the examples shown in the figures, in the example shown in Figure 7 the number of groups of inverters 1 is equal to three, so that the phase displacement generated by the transformer units 20 is approximately 20° (60°/3 = 20°). In the example of Figure 8 the number of groups of inverters 1 is equal to four, so that the phase displacement generated by the transformer units 20 is approximately 15° (60°/4 = 15°). The phase displacement can also be a factor of 360°, the factor corresponding with the result of the equation 1/ph, where ph is the number of total phases (number of inverters per three phases if it is a three-phase inverter). Thus, according to the example of Figure 8, with this new arrangement a phase displacement of 30° (360°/12 = 30°) is generated. This last arrangement for calculating the phase displacement produces larger phase displacements, which results in larger and more expensive transformers.

A method to be used in a converter 100 such as the one described above (in any of its embodiments) is explained below. In the method, DC power is converted into a plurality of alternating-voltage signals 5 by means of a plurality of inverters 1, an inverter 1 being used for each alternating-voltage signal 5, and the alternating-voltage signals 5 combined in parallel, for example in twos and with interphase transformers as explained above, although other means of combining said alternating-voltage signals 5 in parallel can also be used, a resulting signal 6 being obtained from each combination. In the method, two resulting signals 6 are also combined in series to obtain a low-power and low-voltage alternating-voltage output signal 30 of the converter 100, and during the series combination, a specific phase displacement and a galvanic insulation is generated between the two resulting signals 6 that are combined.

To improve the harmonic response in the output signal 30, different modulation techniques can be used for the inverters 1 of converter 100, such as PWM (Pulse Width Modulation), selective harmonic elimination or SHE modulation, or even SVPWM (Space Vector Pulse-Width Modulation).

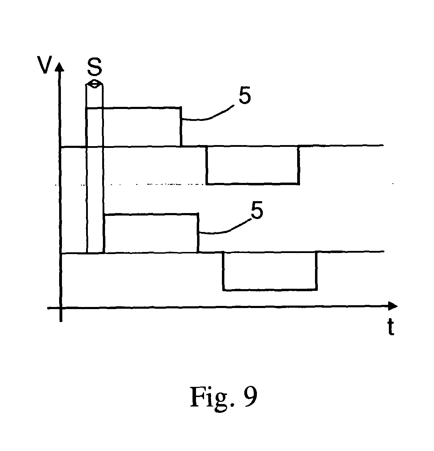

In a first embodiment of the method, selective harmonic elimination or SHE modulation techniques are used, by means of which the phase displacements of the switching signals to the semiconductor devices 101 of each of the inverters 1 of the converter 100 are controlled, the fundamental waves of the different inverters 1 combining in parallel being or not in phase. As a result, certain harmonics of the alternating-voltage signals 5 generated by the inverters 1 are thus eliminated or mitigated, which results in a reduction in the harmonic content of said alternating-voltage signals 5. As shown by way of example in Figure 9 (time t and voltage V in the horizontal and vertical axes respectively), the inverters 1 introduce a phase displacement of a specific angle S between the alternating-voltage signals 5 that are combined in parallel (between two signals in the examples shown), so that, by slightly reducing the magnitude of the resulting signal 6, certain harmonics of said resulting signal 6 are eliminated or reduced in accordance with the value of said angle S, which enables a continued increase in power while also improving the quality of the corresponding resulting signal 6, although the two alternating-voltage signals 5 that are combined can also be in phase by using techniques for modulating the inverters 1 to eliminate or reduce harmonics. Said angle S can be approximately 3.75º for example, an angle at which the harmonics close to twenty-four in the resulting signal 6 are eliminated or reduced, i. e. the harmonics twenty-three and twenty-five, with an negligible reduction of said resulting signal 6, of approximately 7.5º for example, an angle at which the harmonics close to twelve in the resulting signal 6 are eliminated or reduced, in i. e. the harmonics eleven and thirteen, with an negligible reduction of said resulting signal 6, of approximately 2.5º for example, an angle at which the harmonics close to thirty-six in the resulting signal 6 resulting from the combination are eliminated or reduced, i. e. the harmonics thirty-five and thirty-seven, with an negligible reduction of said resulting signal 6.

By way of example, in a first case with SHE modulation, the harmonics close to twenty-four can be eliminated or reduced, i. e. the harmonics twenty-three and twenty-five, provided that with the angle S of phase displacement introduced between two alternating-voltage signals 5 combined in parallel the harmonics close to twelve have been eliminated or reduced, i. e. the harmonics eleven and thirteen. Similarly, in a second case with SHE modulation the harmonics close to twelve can be eliminated or reduced, i. e. the harmonics eleven and thirteen, provided that with the angle S of phase displacement introduced between two alternating-voltage signals 5 combined in parallel the harmonics close to twenty-four have been eliminated or reduced, i. e. the harmonics twenty-three and twenty-five. In the first case each inverter 1 is switched in four angles, which correspond with 7.5º, -7.5º, 37.5º and 22.5º or with 7.5º, -7.5º, -22.5º and -37.5º depending on the sign of the phase displacement generated in the output transformer 20. In the second case each inverter 1 is switched in four angles, which correspond with 3.75º, -3.75º, 33.75º and 26.25º or with 3.75º, -3.75º, -26.25º and -33.75º depending on the sign of the phase displacement generated in the output transformer 20. In the first case the harmonics around thirty-six are also eliminated or reduced, as a result of which in this case the first significant harmonics are harmonics forty-seven and forty-nine, whereas in the second case, the first significant harmonics are thirty-five and thirty-seven.

In a second embodiment of the method PWM (Pulse Width Modulation) type techniques are used, in which the output waveform of an inverter 1 is obtained by comparing a modulating output wave (for example, at a frequency of 50Hz) with a high frequency carrier triangular wave (for example, 600 - 10.000 Hz), an alternating-voltage signal of low harmonic content being obtained. Said PWM can be done by using the respective modulating waves displaced in phase one respect to each other, in both inverters 1 whose alternating-voltage signals are combined in parallel, and the triangular waves that are equal and in phase, or with the modulating waves in phase and the triangular waves equal but displaced in phase one respect to the other at approximately 90º for example. A combination of the two alternatives can also be adopted, i. e. triangular and modulating waves displaced in phase. Similar output voltages can be obtained by alternative means, for example, by using vectorial modulation techniques of the SVPWM (Space Vector Pulse-Width Modulation) type.

## Claims

1. Electronic power converter (100) comprising a plurality of inverters (1) to generate a plurality of three-phase alternating-voltage signals (5) from at least one DC power line (DC), each inverter (1) generating a three-phase alternating-voltage signal (5), **characterised in that** the converter (100) also comprises a connection block (900) in order to combine the inverters (1) in parallel and in twos and obtain at least two resulting three-phase alternating-voltage signals (6), combining in parallel the three-phase alternating-voltage signals (5) generated by said inverters (1) for that purpose and a resulting three-phase alternating-voltage signal (6) being generated as a -result-of each combination in parallel of two three-phase alternating-voltage signals (5); an output (7) for a low-power and low-voltage three-phase alternating-voltage output signal (30); and a low-power and low-voltage transformer block (200) in order to combine in series the resulting three-phase alternating-voltage signals (6) and provide the low-power and low-voltage three-phase alternating-voltage output signal (30) as a result, the transformer block (200) being adapted to generate a specific phase displacement and a galvanic insulation between the resulting signals (6) combined in series.

2. Converter according to claim 1, wherein the transformer block (200) is adapted in order to combine in series the resulting three-phase alternating-voltage signals (6) in twos, comprising a transformer unit (20) for each series combination.

3. Converter according to claim 2, wherein the transformer block (200) comprises a number of transformer units (20) equal to the number of inverters (1) comprised by the converter (100) divided by two, minus one.

4. Converter according to claim 2, wherein the connection block (900) comprises a plurality of connection units (9) connected in series within a branch of a certain number of branches, the transformer block (200) comprising a number of transformer units (20) equal to the number of inverters (1) comprised by the converter (100) divided by the number of connection units (9) connected in series, minus one.

5. Converter according to any of claims 2 to 4, wherein each transformer unit (20) generates, between the resulting three-phase alternating-voltage signals (6; 201) it combines, a minimal phase displacement equal to approximately a factor of 60°, resulting of the equation 60°/m, where m is the number of groups of inverters (1) whose three-phase alternating-voltage output signals (5) are combined in parallel in a single combination, or the number of resulting signals (6) obtained as a result of the different arrangements in parallel of the inverters (1).

6. Converter according to any of claims 2 to 5, wherein each transformer unit (20) comprises a delta winding (21) that receives a three-phase alternating-voltage signal (6; 201) and an open wye winding (22) that receives another three-phase alternating-voltage signal (6; 201), both windings (21, 22) being connected in series.

7. Converter according to any of the preceding claims, wherein the connection block (900) is adapted in order to combine the three-phase alternating-voltage signals (5) in parallel in twos, comprising a connection unit (9) for each combination.

8. Converter according to claim 7, wherein each connection unit (9) comprises an interphase transformer.

9. Power conversion system, **characterised in that** it comprises a converter (100) according to any of the preceding claims, and a coupling transformer to connect the output signal (30) of the converter (100) to a load.

10. Control method for an electronic power converter, in which DC power (DC) is converted into a plurality of three-phase alternating-voltage signals (5) by means of a plurality of inverters (1), an inverter (1) being used for each three-phase alternating-voltage signal (5), **characterised in that** the inverters (1) are combined in parallel, thereby generating at least two three-phase alternating-voltage resulting signals (6) being generated, the three-phase alternating-voltage signals (5) being combined in parallel and in twos, a resulting three-phase alternating-voltage signal (6) being generated as a result of each combination in parallel of two three-phase alternating-voltage signals (5), and, additionally, the resulting resulting three-phase alternating-voltage signals (6) being combined in series to obtain a low-power and low-voltage alternating-voltage output signal (30) of the converter (100), and during the series combination, a specific phase displacement and a galvanic insulation is generated between the resulting three-phase alternating-voltage signals (6) that are combined.

11. Method according to claim 10, wherein the three-phase alternating-voltage signals (5) that are combined in parallel with each other are in phase and comprise different instantaneous voltage values.

12. Method according to claim 10, wherein the three-phase alternating-voltage signals (5) that are combined in parallel with each other comprise a predetermined angle (S) of phase displacement between them for the elimination or reduction of predetermined harmonic components in the resulting three-phase alternating-voltage signal (6) of the combination in parallel of said three-phase alternating-voltage signals (5).

13. Method according to claim 12, wherein in order to generate the three-phase alternating-voltage signals (5) the inverters (1) use a selective harmonic elimination modulation for the elimination or reduction of predetermined harmonic components of the three-phase alternating-voltage signal (5), the harmonic components to be eliminated or reduced by the modulation being different to the harmonic components eliminated or reduced by the phase displacement of the predermined angle (S).

14. Method according to claim 13, wherein, through said selective harmonic elimination modulation, harmonic components twenty-three and twenty-five, are eliminated or reduced, and the predermined angle (S) between the three-phase alternating-voltage signals (5) suitable for eliminating or reducing the harmonic components eleven and thirteen is selected.

15. Method according to claim 13, wherein, through said selective harmonic elimination modulation, harmonic components eleven and thirteen are eliminated or reduced, and the predermined angle (S) suitable for eliminating or reducing the harmonic components twenty-three and twenty-five is selected.

## Patentansprüche

1. Elektronischer Leistungswandler (100), umfassend eine Vielzahl von Wechselrichtern (1) zum Generieren einer Vielzahl von dreiphasigen Wechselspannungssignalen (5) aus mindestens einer Gleichstromleitung (DC), wobei jeder Wechselrichter (1) ein dreiphasiges Wechselspannungssignal (5) generiert, **dadurch gekennzeichnet, dass** der Wandler (100) auch einen Anschlussblock (900) umfasst, um die Wechselrichter (1) parallel und in Paaren zu kombinieren und mindestens zwei resultierende dreiphasige Wechselspannungssignale (6) zu erhalten, die dreiphasigen Wechselspannungssignale (5), die durch die Wechselrichter (1) generiert werden, zu diesem Zweck parallel kombiniert werden und als Ergebnis von jeder parallelen Kombination der beiden dreiphasigen Wechselspannungssignale (5) ein resultierendes dreiphasiges Wechselspannungssignal (6) generiert wird; einen Ausgang (7) für ein dreiphasiges Wechselspannungsausgabesignal (30) mit schwacher Leistung und niedriger Spannung; und einen Transformatorblock (200) mit schwacher Leistung und niedriger Spannung, um die resultierenden dreiphasigen Wechselspannungssignale (6) in Reihe zu kombinieren und das dreiphasige Wechselspannungsausgabesignal (30) mit schwacher Leistung und niedriger Spannung als Ergebnis bereitzustellen, wobei der Transformatorblock (200) adaptiert ist, um eine spezifische Phasenverschiebung und eine galvanische Isolierung zwischen den resultierenden Signalen (6) bereitzustellen, die in Reihe kombiniert werden.

2. Wandler nach Anspruch 1, wobei der Transformatorblock (200) adaptiert ist, um die resultierenden dreiphasigen Wechselspannungssignale (6) in Paaren in Reihe zu kombinieren, was eine Transformatoreinheit (20) für jede Kombination in Reihe umfasst.

3. Wandler nach Anspruch 2, wobei der Transformatorblock (200) eine Reihe von Transformatoreinheiten (20) umfasst, die gleich der Anzahl der Wechselrichter (1), die der Wandler (100) umfasst, geteilt durch zwei, minus eins ist.

4. Wandler nach Anspruch 2, wobei der Anschlussblock (900) eine Vielzahl von Anschlusseinheiten (9) umfasst, die in Reihe innerhalb eines Zweigs einer bestimmten Anzahl von Zweigen geschaltet sind, wobei der Transformatorblock (200) eine Anzahl an Transformatoreinheiten (20) umfasst, die gleich der Anzahl der Wechselrichter (1), die der Wandler (100) umfasst, geteilt durch die Anzahl der Anschlusseinheiten (9), die in Reihe geschaltet sind, minus eins ist.

5. Wandler nach einem der Ansprüche 2 bis 4, wobei jede Transformatoreinheit (20) zwischen den resultierenden dreiphasigen Wechselspannungssignalen (6; 201), die sie kombiniert, eine minimale Phasenverschiebung gleich ungefähr einem Faktor von 60° generiert, was zu der Gleichung 60°/m führt, wobei m die Anzahl der Gruppen von Wechselrichtern (1), deren dreiphasige Wechselspannungsausgabesignale (5) parallel zu einer einzigen Kombination kombiniert werden, oder die Anzahl der resultierenden Signale (6) ist, die als Ergebnis der unterschiedlichen parallelen Anordnungen der Wechselrichter (1) erhalten werden.

6. Wandler nach einem der Ansprüche 2 bis 5, wobei jede Transformatoreinheit (20) eine delta-Wicklung (21), die ein dreiphasiges Wechselspannungssignal (6; 201) empfängt, und eine offene Sternwicklung (22) umfasst, die ein anderes dreiphasiges Wechselspannungssignal (6; 201) empfängt, wobei beide Wicklungen (21, 22) in Reihe geschaltet sind.

7. Wandler nach einem der vorhergehenden Ansprüche, wobei der Anschlussblock (900) adaptiert ist, um die dreiphasigen Wechselspannungssignale (5) parallel in Paaren zu kombinieren, was eine Anschlusseinheit (9) für jede Kombination umfasst.

8. Wandler nach Anspruch 7, wobei jede Anschlusseinheit (9) eine Saugdrossel umfasst.

9. Leistungswandlungssystem, **dadurch gekennzeichnet, dass** es einen Wandler (100) nach einem der vorhergehenden Ansprüche und einen Kopplungstransformator umfasst, um das Ausgabesignal (30) des Wandlers (100) an eine Last anzuschließen.

10. Steuerverfahren für einen elektronischen Leistungswandler, in dem Gleichstromleistung (DC) mithilfe einer Vielzahl von Wechselrichtern (1) in eine Vielzahl von dreiphasigen Wechselspannungssignalen (5) umgewandelt wird, wobei für jedes dreiphasige Wechselspannungssignal (5) ein Wechselrichter (1) verwendet wird, **dadurch gekennzeichnet, dass** die Wechselrichter (1) parallel kombiniert werden, wodurch mindestens zwei resultierende dreiphasige Wechselspannungssignale (6) generiert werden, die dreiphasigen Wechselspannungssignale (5) parallel und in Paaren kombiniert werden, als Ergebnis jeder parallelen Kombination von zwei dreiphasigen Wechselspannungssignalen (5) ein resultierendes dreiphasiges Wechselspannungssignal (6) generiert wird und zusätzlich die resultierenden dreiphasigen Wechselspannungssignale (6) in Reihe kombiniert werden, um ein Wechselspannungsausgabesignal (30) mit schwacher Leistung und niedriger Spannung des Wandlers (100) zu erhalten, und wobei während der Kombination in Reihe eine spezifische Phasenverschiebung und eine galvanische Isolierung zwischen den resultierenden dreiphasigen Wechselspannungssignalen (6) generiert wird, die kombiniert werden.

11. Verfahren nach Anspruch 10, wobei die dreiphasigen Wechselspannungssignale (5), die parallel zueinander kombiniert werden, in Phase sind und unterschiedliche Momentanspannungswerte umfassen.

12. Verfahren nach Anspruch 10, wobei die dreiphasigen Wechselspannungssignale (5), die parallel miteinander kombiniert werden, einen vorgegebenen Winkel (S) der Phasenverschiebung zwischen ihnen umfassen, um vorgegebene harmonische Komponenten in dem resultierenden dreiphasigen Wechselspannungssignal (6) der parallelen Kombination der dreiphasigen Wechselspannungssignale (5) zu eliminieren oder zu reduzieren.

13. Verfahren nach Anspruch 12, wobei die Wechselrichter (1), um die dreiphasigen Wechselspannungssignale (5) zu generieren, eine selektive Harmonische eliminierende Modulation zur Eliminierung oder Reduktion von vorgegebenen harmonischen Komponenten des dreiphasigen Wechselspannungssignals (5) verwenden, wobei die durch die Modulation zu eliminierenden oder zu reduzierenden harmonischen Komponenten sich von den harmonischen Komponenten unterscheiden, die durch die Phasenverschiebung des vorgegebenen Winkels (S) eliminiert oder reduziert werden.

14. Verfahren nach Anspruch 13, wobei durch die selektive Harmonische eliminierende Modulation die harmonischen Komponenten dreiundzwanzig und fünfundzwanzig eliminiert oder reduziert werden und der vorgegebene Winkel (S) zwischen den dreiphasigen Wechselspannungssignalen (5) so ausgewählt wird, dass er zur Eliminierung oder Reduktion der harmonischen Komponenten elf und dreizehn geeignet ist.

15. Verfahren nach Anspruch 13, wobei durch die selektive Harmonische eliminierende Modulation die harmonischen Komponenten elf und dreizehn eliminiert oder reduziert werden und der vorgegebene Winkel (S) so ausgewählt wird, dass er zur Eliminierung oder Reduktion der harmonischen Komponenten dreiundzwanzig und fünfundzwanzig geeignet ist.

## Revendications

1. Convertisseur de puissance électronique (100) comprenant une pluralité d'onduleurs (1) pour générer une pluralité de signaux de tension alternative triphasée (5) à partir d'au moins une ligne électrique à CC (CC), chaque onduleur (1) générant un signal de tension alternative triphasée (5), **caractérisé en ce que** le convertisseur (100) comprend également un bloc de connexion (900) afin de combiner les onduleurs (1) en parallèle et par deux et d'obtenir au moins deux signaux de tension alternative triphasée résultants (6), combinant en parallèle les signaux de tension alternative triphasée (5) générés par lesdits onduleurs (1) à cette fin et un signal de tension alternative triphasée résultant (6) étant généré suite à chaque combinaison en parallèle des deux signaux de tension alternative triphasée (5) ; une sortie (7) pour un signal de sortie de tension alternative triphasée basse puissance et basse tension (30) ; et un bloc de transformateurs basse puissance et basse tension (200) afin de combiner en série les signaux de tension alternative triphasée (6) et fournir le signal de sortie de tension alternative triphasée basse puissance et basse tension (30) en tant que résultat, le bloc de transformateurs (200) étant conçu pour générer un déphasage spécifique et une isolation galvanique entre les signaux résultants (6) combinés en série.

2. Convertisseur selon la revendication 1, dans lequel le bloc de transformateurs (200) est conçu pour combiner en série les signaux de tension alternative triphasée (6) par deux, comprenant une unité de transformateur (20) pour chaque combinaison en série.

3. Convertisseur selon la revendication 2, dans lequel le bloc de transformateurs (200) comprend un nombre d'unités de transformateur (20) égal au nombre d'onduleurs (1) composant le convertisseur (100) divisé par deux, moins un.

4. Convertisseur selon la revendication 2, dans lequel le bloc de connexion (900) comprend une pluralité d'unités de connexion (9) connectées en série à l'intérieur d'une dérivation d'un certain nombre de dérivations, le bloc de transformateur (200) comprenant un nombre d'unités de transformateur (20) égal au nombre d'onduleurs (1) composant le convertisseur (100) divisé par le nombre d'unités de connexion (9) connectées en série, moins un.

5. Convertisseur selon l'une quelconque des revendications 2 à 4, dans lequel chaque unité de transformateur (20) génère, entre les signaux de tension alternative triphasée résultants (6; 201) qu'elle combine, un déphasage minimal égal à approximativement un facteur de 60°, résultant de l'équation 60°/m, où m est le nombre de groupes d'onduleurs (1) dont les signaux de sortie de tension alternative triphasée (5) sont combinés en parallèle dans une seule combinaison, ou le nombre de signaux résultants (6) obtenus suite aux différents agencements en parallèle des onduleurs (1).

6. Convertisseur selon l'une quelconque des revendications 2 à 5, dans lequel chaque unité de transformateur (20) comprend un enroulement en triangle (21) qui reçoit un signal de tension alternative triphasée (6 ; 201) et un enroulement en étoile ouverte (22) qui reçoit un autre signal de tension alternative triphasée (6 ; 201), les deux enroulements (21, 22) étant connectés en série.

7. Convertisseur selon l'une quelconque des revendications précédentes, dans lequel le bloc de connexion (900) est conçu pour combiner les signaux de tension alternative triphasée (5) en parallèle par deux, comprenant une unité de connexion (9) pour chaque combinaison.

8. Convertisseur selon la revendication 7, dans lequel chaque unité de connexion (9) comprend un transformateur interphase.

9. Système de conversion de puissance, **caractérisé en ce qu'**il comprend un convertisseur (100) selon l'une quelconque des revendications précédentes, et un transformateur de couplage pour connecter le signal de sortie (30) du convertisseur (100) à une charge.

10. Procédé de contrôle pour un convertisseur de puissance électronique, dans lequel le courant CC (CC) est converti en une pluralité de signaux de tension alternative triphasée (5) à l'aide d'une pluralité d'onduleurs (1), un onduleur (1) étant utilisé pour chaque signal de tension alternative triphasée (5), **caractérisé en ce que** les onduleurs (1) sont combinés en parallèle, générant ainsi au moins deux signaux résultants de tension alternative triphasée (6), les signaux de tension alternative triphasée (5) étant combinés en parallèle et par deux, un signal de tension alternative triphasée résultant (6) étant généré suite à chaque combinaison en parallèle de deux signaux de tension alternative triphasée (5) et, en outre, les signaux de tension alternative triphasée résultants (6) étant combinés en série pour obtenir un signal de sortie de tension alternative basse puissance et basse tension (30) du convertisseur (100), et lors de la combinaison en série, un déphasage spécifique et une isolation galvanique sont générés entre les signaux de tension alternative triphasée résultants (6) qui sont combinés.

11. Procédé selon la revendication 10, dans lequel les signaux de tension alternative triphasée (5) qui sont combinés en parallèle les uns avec les autres sont en phase et comprennent différentes valeurs de tension instantanées.

12. Procédé selon la revendication 10, dans lequel les signaux de tension alternative triphasée (5) qui sont combinés en parallèle les uns avec les autres comprennent un angle prédéterminé (S) de déphasage entre eux pour l'élimination ou la réduction de composantes harmoniques prédéterminées dans le signal de tension alternative triphasée résultant (6) de la combinaison en parallèle desdits signaux de tension alternative triphasée (5).

13. Procédé selon la revendication 12, dans lequel afin de générer les signaux de tension alternative triphasée (5), les onduleurs (1) utilisent une modulation à sélection d'harmoniques à éliminer pour l'élimination ou la réduction de composantes harmoniques prédéterminées du signal de tension alternative triphasée (5), les composantes harmoniques devant être éliminées ou réduites par la modulation étant différentes des composantes harmoniques éliminées ou réduites par le déphasage de l'angle prédéterminé (S).

14. Procédé selon la revendication 13, dans lequel, par le biais de ladite modulation à sélection d'harmoniques à éliminer, les composantes harmoniques vingt-trois et vingt-cinq sont éliminées ou réduites, et l'angle prédéterminé (S) entre les signaux de tension alternative triphasée (5) adéquat pour éliminer ou réduire les composantes harmoniques onze et treize est sélectionné.

15. Procédé selon la revendication 13, dans lequel, par le biais de ladite modulation à sélection d'harmoniques à éliminer, les composantes harmoniques onze et treize sont éliminées ou réduites, et l'angle prédéterminé (S) adéquat pour éliminer ou réduire les composantes harmoniques vingt-trois et vingt-cinq est sélectionné.
